# EUROPEAN PATENT APPLICATION

(11) **EP 1 055 928 A2**
(43) Date of publication of application: **29.11.2000**
(21) Application number: 00650032.6
(22) Date of filing: 13.04.2000
(51) Int. Cl.: G01N 31/22

(54) **A gas sensor**

(30) Priority: 26.05.1999 IE 990425
(71) Applicant: E.I. Technology Limited, Shannon, County Clare (IE)
(72) Inventor: Byrne, Michael, Limerick (IE); Duignan, James, Limerick (IE); Guinee, Michael, Limerick (IE)
(74) Representative: Weldon, Michael James

(57) **Abstract**

A gas sensor (1) has a reagent (5) of orange colour and which becomes darker in colour upon contact with CO. The reagent (5) is partially covered by a mask (6) which retards diffusion of contaminants to the reagent surface behind the mask. Thus, for example, if the exposed part becomes bleached by contaminants, CO will still be indicated as a dark line at the edge of the mask (6).

## Description

The invention relates to a gas sensor of the type comprising a reagent which changes colour upon contact with a toxic gas such as carbon monoxide (CO).

Typically, the reagent is dispersed on a silica substrate. The reagent compositions are generally well known and compositions are described, for example, in United States Patent Specification Nos. 4482635 (DuPont) and US5063164 (Quantum Group). Typically, the sensor is mounted on a wall close to a potential source of toxic gas such as a boiler. The occupants of the premises regularly check the sensor to see if the colour has changed. For example, in a palladium chloride/copper chloride reagent system the colour will change from bright orange to a darker colour when CO is present.

A development of this type of sensor is described in United States Patent Specification No. US5618493 (Quantum). In this sensor, the same basic principles are used, however, in this case the colour change is detected automatically by an optical system connected to an alarm output device.

One of the problems with this type of sensor is that contaminants such as amonia, strong oxidising agents, hydrogen sulphide, alkenes, and alkynes also cause the sensor to change colour. For example, in a palladium chloride based reagent the reagent may be bleached. Alternatively, the reagent may change colour in the same manner as if it were exposed to the toxic gas being sensed. In general, it is very difficult to predict the useful life of the sensors because of these contaminants and this has led to a perception that reliability of such sensors could be improved.

It is therefore an object of the invention to provide a gas sensor which is of simple construction and which has a more predictable useful life.

Another object is to provide a more clear visual indication of presence of a toxic gas.

According to the invention, there is provided a gas sensor comprising a sensing reagent for exposure to air and which changes colour when it comes in contact with a toxic gas such as CO, characterised in that the gas sensor further comprises a transparent mask mounted to retard diffusion of contaminants to the reagent surface.

In one embodiment, the gas sensor comprises a base housing the reagent in a recess in a manner to leave a surface exposed, and the mask extends across the recess.

In one embodiment, the mask is of non-permeable material and partially covers the reagent.

Preferably, the mask is supported to cover the reagent with a separation in a range up to 0.8mm.

In one embodiment, the separation is in a range up to 0.5mm.

In one embodiment, the reagent has a rough surface and the mask is in contact with the reagent at surface peaks.

In one embodiment, the mask has a straight edge to provide a straight linear diffusion gap over the reagent.

In another embodiment, the mask is of polystyrene material.

In one embodiment, the mask has a thickness of 0.1 to 0.2 mm, and preferably approximately 0.12 mm.

In a further embodiment, the mask is stretched across a recess housing the reagent and is sealed to a base by heat staking.

In one embodiment, the reagent comprises palladium chloride and copper chloride having an orange colour, changing to a darker colour upon contact with CO.

The invention will be more clearly understood from the following description of some embodiments thereof, given by way of example only with reference to the accompanying drawings in which:-
Fig. 1 is a front view of a gas sensor of the invention;
Fig. 2 is a cross-sectional side view of the sensor; and
Fig. 3(a) and 3(b) are front views of a reagent before and after CO detection respectively.

Referring to the drawings, there is shown a gas sensor 1. The sensor 1 comprises a plastics housing 2 in the form of a flat plate. The housing 2 comprises a disc-shaped recess 3 which houses a reagent 5. The recess 3 is surrounded on the front surface of the housing 2 by a printed ring 4 which has the same colour as the reagent at manufacture.

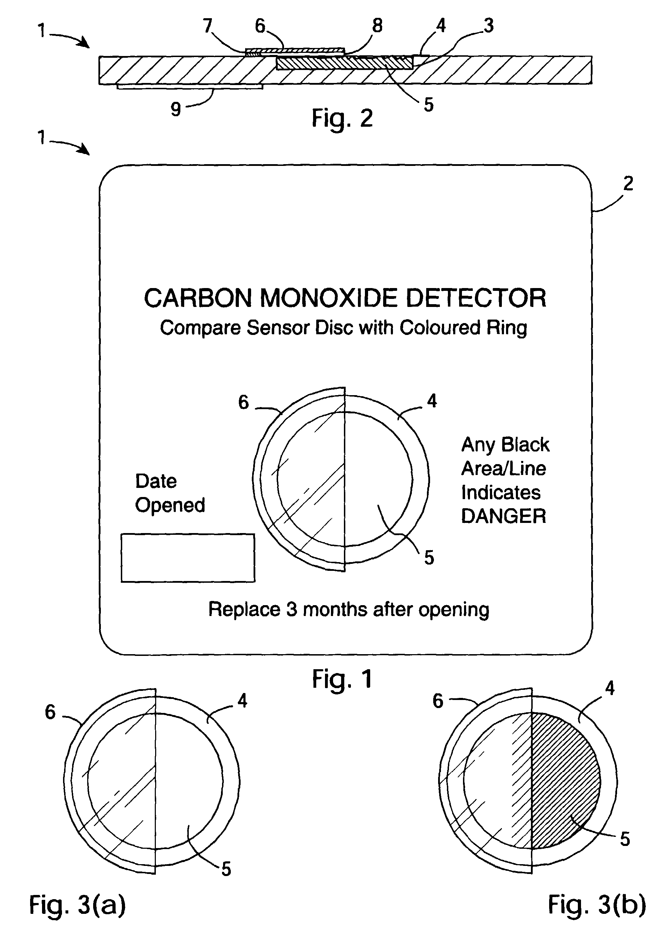

In addition, a clear polystyrene mask 6 is heat staked at a seal 7 to the housing 2 so that it covers approximately half of the reagent 5. This is shown most clearly in Fig. 2. The mask 6 is clear and has a thickness of 0.12mm. It is at a distance of between touching and 0.5mm from the reagent. Because the mask 6 has a straight edge over the reagent 5, it presents a straight linear diffusion gap 8 between the mask 6 and the reagent 5. The width of this gap varies between 0.0 and 0.5mm because of roughness of the reagent surface.

At its rear surface, the housing 2 comprises an adhesive pad 9 for adhering the gas sensor 1 to a wall in a convenient manner.

The chemical operating mode of the reagent is based on the Wacker reaction. This reaction is used in the industrial conversion of alkenes, alkynes and CO to products such as acetaldehyde. For CO detection, the reaction involves a palladium (II) chloride/copper (II) chloride co-catalyst system which acts in a pseudo-homogeneous manner. A simplified reaction mechanism may be written in terms of the following key reaction steps:
1. Chemical reduction reaction between CO and the palladium chloride, in which the CO is convened to CO₂ and the palladium is reduced from the +2 oxidation state to the 0 oxidation state (i.e. Pd metal); 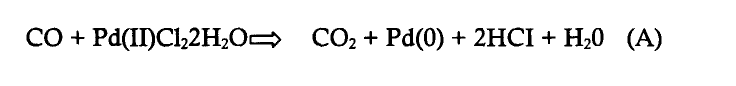 This step occurs when the sensor is exposed to air containing CO.
2. Oxidative regeneration reactions in which, first the Pd(0) is oxidised back to Pd(II) by the Cu(II) chloride (which in turn is reduced to the Cu(I) chloride): 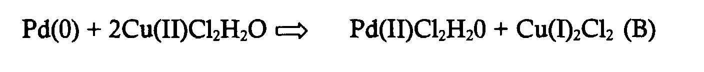 and then the Cu(I) chloride is re-oxidised back to Cu(II) chloride by atmospheric oxygen: 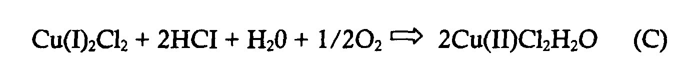 Steps (B) and (C) occur when the sensor is exposed to air which is free from CO.

As can be seen from the above, the presence and retention of both water and hydrogen chloride within the sensor structure is essential in order to allow proper reversible functioning of the device as a CO sensor. This is achieved by use of a high surface area hydrophilic silica gel as a support for the reaction component; the inclusion of hygroscopic, chloride-containing materials such as calcium chloride; and the addition of strong acids such as silicomolybdic acid.

Other materials, such as molecular encapsulants, are also included in order to protect against unwanted interference in the sensing reaction by contaminants such as cigarette smoke. These reagents work primarily by size exclusion, i.e. they only allow small molecules such as CO to access the chemically active area of the sensor.

It has been found that the mask 6 retards diffusion of contaminants to that portion of the reagent which it covers. At the same time, the mask allow ingress of CO so that if CO is present, it migrates underneath the mask 6 to cause the reagent behind the mask 6 to darken. Referring to Fig. 3(a), the relevant part of the sensor 1 is shown for the situation in which no toxic gas has been detected and there is no contamination. The colour of the ring 4, of the exposed reagent 5, and the reagent 5 behind the mask 6 is the same. However, as shown in Fig. 3(b) when CO is detected the exposed reagent 5 becomes darker as illustrated by the hatched lines. Also, a line of reagent 5 behind the mask 6 and alongside the gap 8 also becomes darker, again as shown by hatched lines. This is because the CO migrates through the gap 8. If the reagent 5 is exposed to contamination, the exposed part becomes bleached and insensitive to CO. However, the part covered by the mask 6 remains sensitive and CO would be indicated by the darker line behind the mask 6 alongside the gap 8. It was noted in tests that if the mask were not present the whole reagent may become bleached and so it would all be insensitive to CO.

Thus, the invention in a very simple manner provides for a more clear visual indication of presence of a toxic gas, while also prolonging the useful life of the sensor.

The effectiveness of the mask is apparently due to a combination of factors, including some or all of the following.
- The diffusivity of the CO is higher than that of contaminants such as smmonia.
- Eddy/turbulent diffusion transports the gases up to the laminar boundary layer. Molecular diffusion then transports the molecules to the reagent. The mask 6 significantly reduces the effect of eddy diffusion, thus slowing down the reaction. The reagent normally responds within minutes to CO. Doubling this time for example is usually not a problem as CO affects people relatively slowly. For example, at 150 ppm it takes 90 minutes for the first symptoms, a slight headache, in a healthy adult to appear. Therefore increasing the time to CO is acceptable, provided the effect of contaminants is also reduced.
- A type of sacrificial filtration appears to take place. As a contaminant molecule diffuses towards the channel created by the mask 6 it is absorbed permanently. This protects the still active reagent further up the channel.
- Field trials have confirmed that the mask 6 significantly extends the useful life of the sensors. Because the reaction is slowed by the mask 6, short high concentrations of contamination (e.g. due to spilling ammonia) will have less effect.

The invention is not limited to the embodiments described but may be varied in construction and detail. For example, the mask may take a different form, depending on the nature of the reagent and the manner in which it is housed. The important point is that it covers some or all of the reagent to retard diffusion of contaminants. In the embodiment described, a relatively small gap is provided for penetration of the toxic gas while retarding penetration of contaminants.

The gap between the mask and the reagent may be larger than between touching and 0.5mm, possibly up to 0.8mm. However, it has been found that the range described is particularly useful. Even where the mask is in contact with the reagent, there is still diffusion because of the rough reagent surface profile. The mask need not be completely transparent, just sufficiently so to allow a view of the reagent behind it. Also, the mask may be permeable to lighter, toxic gases and impermeable to heavier contaminants. In this embodiment the whole reagent may be covered by the mask.

## Claims

1. A gas sensor (1) comprising a sensing reagent (5) for exposure to air and which changes colour when it comes in contact with a toxic gas such as CO, characterised in that the gas sensor further comprises a transparent mask (6) mounted to retard diffusion of contaminants to the reagent surface.

2. A gas sensor as claimed in claim 1, wherein the gas sensor comprises a base (2) housing the reagent in a recess (3) in a manner to leave a surface exposed, and the mask (6) extends across the recess.

3. A gas sensor as claimed in claim 1 or 2, wherein the mask is of non-permeable material and partially covers the reagent (5).

4. A gas sensor as claimed in claim 3, wherein the mask (6) is supported to cover the reagent with a separation (8) in a range up to 0.8mm.

5. A gas sensor as claimed in claim 4, wherein the separation (8) is in a range up to 0.5mm.

6. A gas sensor as claimed in claim 4 or 5, wherein the reagent (5) has a rough surface and the mask (6) is in contact with the reagent at surface peaks.

7. A gas sensor as claimed in any of claims 3 to 6, wherein the mask has a straight edge to provide a straight linear diffusion gap (8) over the reagent (5).

8. A gas sensor as claimed in any of claims 3 to 7, wherein the mask (6) is of polystyrene material.

9. A gas sensor as claimed in any of claims 3 to 8, wherein the mask (6) has a thickness of 0.1 to 0.2 mm.

10. A gas sensor as claimed in claim 9, wherein the mask (6) has a thickness of approximately 0.12 mm.

11. A gas sensor as claimed in any of claims 8 to 10, wherein the mask (6) is stretched across a recess (3) housing the reagent and is sealed to a base by heat staking (7).

12. A gas sensor as claimed in any preceding claim, wherein the reagent (5) comprises palladium chloride and copper chloride having an orange colour, changing to a darker colour upon contact with CO.

13. A gas sensor (1) substantially as described with reference to the drawings.
